Europäisches Patentamt

European Patent Office

Office européen des brevets

(11) Veröffentlichungsnummer: **0 111 043**
**A1**

(12) # EUROPÄISCHE PATENTANMELDUNG

(21) Anmeldenummer: 83104164.5

(22) Anmeldetag: 28.04.83

(51) Int. Cl.³: **H 01 B 3/44**
C 08 L 23/02, C 08 K 5/05
C 08 K 5/07

(30) Priorität: 03.12.82 DE 3244704

(43) Veröffentlichungstag der Anmeldung:
20.06.84 Patentblatt 84/25

(84) Benannte Vertragsstaaten:
BE GB NL SE

(71) Anmelder: Licentia Patent-Verwaltungs-GmbH
Theodor-Stern-Kai 1
D-6000 Frankfurt/Main 70(DE)

(72) Erfinder: Saure, Manfred, Dr. phil.
Weissensteinstrasse 47
D-3500 Kassel(DE)

(72) Erfinder: Wartusch, Johann, Dipl.-Chem.
Am Kaiserberg 13
D-3502 Vellmar(DE)

(74) Vertreter: Lertes, Kurt, Dr. et al,
Licentia Patent-Verwaltungs-GmbH Theodor-Stern-Kai 1
D-6000 Frankfurt/M 70(DE)

(54) Elektrische Isolierung mit Stabilisator.

(57) Isolierstoff auf Polyolefinbasis - beispielsweise ein Polyethylen niedriger Dichte, das peroxidisch vernetzt ist - ist mit einem Stabilisatorgemisch versehen, bestehend aus einem oder mehreren zweiwertigen, verzweigt-kettigen Hydroxylverbindungen und ferner flüssigen oder bis 80° C verflüssigbaren aliphatischen oder aliphatisch/aromatischen Verbindungen mit alkoholischen und/oder ketonischen funktionellen Gruppen. Der Isolierstoff zeigt ein verbessertes Langzeitdurchschlagsverhalten, und zwar auch in Gegenwart von Feuchtigkeit; er bietet Schutz gegen "watertrees-Wachstum" und die Entstehung von "electrical trees". Das Stabilisatorgemisch läßt sich besonders gut in das Polyolefin einarbeiten und ist mit ihm auf Dauer verträglich.

EP 0 111 043 A1

L i c e n t i a
Patent-Verwaltungs-GmbH
6000 Frankfurt/Main 70, Theodor-Stern-Kai 1

F 82/52

## Elektrische Isolierung mit Stabilisator

Die Erfindung betrifft einen mit Spannungsstabilisator versehenen elektrischen Isolierstoff auf Polyolefinbasis.

Die Stabilisierung von Polyethylen-Massen, insbesondere zur Kabelisolierung, gegen zerstörende Einflüsse unter elektrischer Hochspannung ist von besonderer Bedeutung. Solche Einflüsse gehen von sogenannten "treeing-Phänomenen" aus und treten zumal bei gleichzeitiger Gegenwart von Feuchtigkeit in der Isolierung auf.

Bei der Verarbeitung der Polyethylen-Massen treten mikroskopische und submikroskopische Schwachstellen in Form von Lunkern und Mikrorissen auf. Ferner können Fremdstoffe als Verunreinigungen in die Isolation gelangen. Diese Schwachstellen wirken sich in Gegenwart von Feuchtigkeit, die z. B. während der Vernetzung mit Dampf oder im verlegten Zustand aus der Erdfeuchtigkeit in die Isolierung gelangt ist, besonders nachteilig aus; dann gehen nämlich von den Schwachstellen der Isolierung unter dem Einfluß des Wassers und des elektrischen Feldes sogenannte "watertrees" aus. Das sind zunächst mikroskopisch kleine, als Astwerk ("treeing") sichtbare Materialzerstörungen, die sich ausweiten und schließlich (in Form von watertrees oder electrical trees) zu einer Überbrückung der isolierten Elektroden und in der Folge zum Durchschlag führen.

Gegen die "watertrees", die als Folge von Feuchtigkeit in der Isolierung auftreten, und die dadurch ausgelöste Materialzerstörung wurden bisher noch sehr wenige Stabilisierungsmöglichkeiten gefunden. Die für die elektrische Spannungsstabilisierung gefundenen Stoffe erwiesen sich in diesem Falle als nicht oder nur begrenzt wirksam. So ist z. B. die Verwendung von anorganischen Salzen (H. Matsuba et al. "Watertree mechanism and its suppression" IEEE 1976 Montreal bzw. DE-OS 25 37 283), von Bleistearat (DE-OS 24 25 760) sowie Oligomeren bzw. gepfropftem Polyethylen (R. M. Eichhorn "Permanent inhibition of watertree growth in polyethylene" IEEE 1979, New York) als Stabilisator gegen "watertrees" bekannt geworden. Es wurde auch schon berichtet, daß in Kabelisoliermassen längerkettige einwertige Alkohole Verwendung finden (DE-OS 27 34 071 und E. J. McMahon, "A tree growth inhibiting insulation for power cable", IEEE-Transactions 1980).

Die bekannten Stabilisator-Zusätze weisen jedoch in der einen oder anderen Richtung Nachteile auf. Entweder lassen sie sich in die zu verwendenden Isoliermischungen schlecht einmischen, sind in dieser auf Dauer zu unverträglich, haben eine zu geringe Migrationsgeschwindigkeit zu den in der Isolation zu schützenden Schwachstellen, diffundieren aus dem Isolierstoff zu schnell aus, stören die Vernetzung oder haben - verglichen mit dem unstabilisierten Vergleichsmaterial - keinen hinreichend hohen Schutzfaktor gleichzeitig gegen das watertree-Wachstum und gegen die Entstehung von electrical trees.

Es ist auch bereits vorgeschlagen worden (P 32 10 139.2), dem Isolierstoff ein Stabilisatorgemisch zuzusetzen, bestehend aus einem oder mehreren aliphatischen zweiwertigen Alkoholen mit 4... 15 Kohlenstoffatomen und weiterhin flüssigen oder bis etwa 80 $^{o}$C verflüssigbaren aliphatischen oder alphatisch/aromatischen Verbindungen mit alkoholischen und/oder ketonischen funktionellen Gruppen. Diese Stabilisatorkombination zeigt zwar eine ausgezeichnete Stabilisierung, jedoch treten Schwierigkeiten bei der Verarbeitbarkeit der Mischung auf.

Der Erfindung liegt daher die Aufgabe zugrunde, einen Stabilisator verfügbar zu machen, der neben einer guten Stabilisierung eine den technischen Anforderungen genügende Verarbeitbarkeit gewährleistet.

Diese Aufgabe wird gemäß der Erfindung dadurch gelöst, daß der Isolier-

3

stoff ein Stabilisatorgemisch enthält, bestehend aus ein oder mehreren 2wertigen, verzweigt-kettigen Hydroxylverbindungen und ferner flüssigen oder bis etwa 80 °C verflüssigbaren aliphatischen oder aliphatisch/ aromatischen Verbindungen mit alkoholischen und/oder ketonischen funktionellen Gruppen.

Weiterbildungen und vorteilhafte Ausgestaltungen der Erfindung sind den Unteransprüchen zu entnehmen.

Der Stabilisator gemäß der Erfindung zeigt einerseits eine ausgezeichnete Stabilisierung gegen "watertrees" und "electrical trees" und andererseits eine gute Verarbeitbarkeit bzw. bessere Verträglichkeit mit vernetztem Polyethylen. Der Stabilisator läßt sich gut abmischen und es tritt auch keine Entmischung bei der Extrusion auf.

Die zu verwendende Menge des Stabilisators richtet sich in ihrer Dosierung nach dem erwarteten Stabilisierungseffekt, insbesondere hinsichtlich der Langzeitstabilisierung, sowie nach der Verträglichkeit in dem jeweiligen Isolierstoff. Dabei hat sich bewährt, daß der Anteil des Stabilisators 0,3 ... 5 Gewichts-%, vorzugsweise 1 ... 3 Gewichts-%, beträgt. Die Hydroxylverbindungen können flüssig oder verflüssigbar sein. Die weiteren Zusätze bestehen aus bei Raumtemperatur flüssigen oder bis 80 °C schmelzenden aliphatischen, aromatischen oder gemischt-substituierten Keto- und/oder Hydroxylverbindungen, z. B. Isopropanolbenzol, Acetophenon, 1,3- oder 1,4-Diacetylbenzol, 1,3- oder 1,4-Diisopropanolbenzol oder 1,3- oder 1,4 Acetylisopropanolbenzol. Durch diese Kombination ist gewährleistet, daß bereits beim Einschalten des Kabels ein migrationsfähiger, flüssiger Stabilisator zur Verfügung steht, aber andererseits auch ein bei Betriebstemperatur wirksam werdender Stabilisator durch Aufschmelzen zur Verfügung gehalten wird.

Das Polyethylen, vorzugsweise ein Polyethylen niedriger Dichte (D = 0,918 g/cm$^3$), kann sowohl peroxidisch als auch mit einem Silan vernetzt werden. Wenn peroxidisch vernetzt wird, kann Dicumylperoxid, insbesondere aber Bis-[tertiärbutyl-isopropyl-benzol] sowie ein Gemisch aus beiden verwendet werden.

4

Der Isolierstoff gemäß der Erfindung zeigt gegenüber unstabilisiertem Material erheblich verbesserte Eigenschaften, wie Wachstumsuntersuchungen der "watertrees" bewiesen.

Mit einer vernetzten Isoliermischung nach dieser Erfindung wurden gegenüber kommerziellem, nicht stabilisiertem, vernetztem Polyethylen nach einer Temperung bei 80 $^{O}$C folgende Daten ermittelt:

| | | |
|---|---|---|
| watertree-Wachstum bei 80 $^{O}$C | $<$100 | $\mu$m bei stabilisiertem VPE |
| | $>$300 | $\mu$m bei nicht stabilisiertem VPE |
| electrical tree-Einsatz-spannung bei 80 $^{O}$C | $\geq$ 16 kV | bei stabilisiertem VPE |
| | 8 kV | bei nicht stabilisiertem VPE |

Diese Angaben zeigen, daß mit den erfindungsgemäßen Stabilisatoren die treeing-Beständigkeit eines Kabelisolierstoffs erheblich erhöht wird, womit eine verbesserte elektrische Langzeitfestigkeit von Kabelisolierungen unter erschwerten Bedingungen erreicht werden kann.

Um speziell die besonders gefährdeten Isolationsgrenzflächen zu schützen, hat es sich als zweckmäßig erwiesen, auch die halbleitenden Polymer-Schirme mit den Stabilisatoren nach der Erfindung auszurüsten.

5

Licentia

Patent-Verwaltungs-GmbH

6000 Frankfurt/Main, Theodor-Stern-Kai 1

F 82/52

Elektrische Isolierung mit Stabilisator

Patentansprüche

1. Mit Spannungsstabilisator versehener elektrischer Isolierstoff auf Polyolefinbasis,

d a d u r c h   g e k e n n z e i c h n e t ,

daß der Isolierstoff ein Stabilisatorgemisch enthält, bestehend aus ein oder mehreren 2wertigen, verzweigt-kettigen Hydroxylverbindungen und ferner flüssigen oder bis etwa 80 $^{O}$C verflüssigbaren aliphatischen oder aliphatisch / aromatischen Verbindungen mit alkoholischen und/ oder ketonischen funktionellen Gruppen.

2. Stabilisatorgemisch nach Anspruch 1,

d a d u r c h   g e k e n n z e i c h n e t ,

daß als Hydroxylverbindungen Alkohole verwendet werden.

3. Stabilisatorgemisch nach Anspruch 2,

d a d u r c h   g e k e n n z e i c h n e t ,

daß als Alkohol 2-Methylpentan-diol-(2,4) verwendet wird.

4. Stabilisatorgemisch nach Anspruch 2,

d a d u r c h   g e k e n n z e i c h n e t ,

daß als Alkohol 2,2-Dimethyl-1,3-propandiol verwendet wird.

0111043

6

5. Stabilisatorgemisch nach Anspruch 2,
   d a d u r c h   g e k e n n z e i c h n e t ,
   daß als Alkohol Hydroxylabkömmlinge des Dicyclopentadiens verwendet
   wird.

6. Stabilisatorgemisch nach Anspruch 1,
   d a d u r c h   g e k e n n z e i c h n e t ,
   daß als Hydroxylverbindung ein zumindest 2 alkoholische Gruppen enthaltender Carbonsäureester verwendet wird.

7. Stabilisatorgemisch nach Anspruch 6,
   d a d u r c h   g e k e n n z e i c h n e t ,
   daß als Cabonsäureester ein Hydroxypivalinsäureneopentylglykolester
   verwendet wird.

8. Stabilisatorgemisch nach einem der Ansprüche 1 bis 7,
   d a d u r c h   g e k e n n z e i c h n e t ,
   daß er in der Stabilisatorkombination $\alpha$,$\alpha$-Dimethylbenzylalkohol,
   Acetophenon, Benzophenon, 1,4-Diacetylbenzol, 1,3-Diacetylbenzol,
   1,4-Diisopropanolbenzol, 1,3-Diisopropanolbenzol oder 1-Acetyl-4-iso-
   propanolbenzol bzw. 1-Acetyl-3-isopropanolbenzol allein oder im
   Gemisch enthält.

9. Stabilisatorgemisch nach Anspruch 8,
   d a d u r c h   g e k e n n z e i c h n e t ,
   daß $\alpha$,$\alpha$-Dimethylbenzylalkohol, Acetophenon, Benzophenon, 1,4-Diacetylbenzol, 1,3-Diacetylbenzol, 1,4-Diisopropanolbenzol, 1,3-Diisopropanolbenzol oder 1-Acetyl-4-isopropanolbenzol bzw. 1-Acetyl-3-isopro-
   panolbenzol in Mengen von 0,5 ... 3 Gewichts-% enthalten sind.

10. Stabilisatorgemisch nach einem der Ansprüche 1 bis 9,
    d a d u r c h   g e k e n n z e i c h n e t ,
    daß als Polyolefin ein Polyethylen niedriger Dichte (D = 0,918 g/cm$^3$)
    verwendet wird.

11. Stabilisatorgemisch nach Anspruch 10,
    d a d u r c h  g e k e n n z e i c h n e t ,
    daß ein peroxidisch vernetztes Polyethylen verwendet wird.

12. Stabilisatorgemisch nach Anspruch 10,
    d a d u r c h  g e k e n n z e i c h n e t ,
    daß ein Polyethylen verwendet wird, das mit Silan vernetzt ist.

0111043

Europäisches
Patentamt

# EUROPÄISCHER RECHERCHENBERICHT

Nummer der Anmeldung

EP 83 10 4164

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,X | EP-A-0 089 490  (LICENTIA)<br>* Ansprüche *<br><br>--- | 1-12 | H 01 B    3/44<br>C 08 L   23/02<br>C 08 K    5/05<br>C 08 K    5/07 |
| A | EP-A-0 024 162  (DU PONT)<br><br>--- | | |
| A | DE-A-2 837 358  (LICENTIA)<br><br>--- | | |
| A | DE-A-2 837 311  (LICENTIA)<br><br>----- | | |

RECHERCHIERTE SACHGEBIETE (Int. Cl. ³)

H 01 B    3/00

Der vorliegende Recherchenbericht wurde für alle Patentansprüche erstellt.

| Recherchenort<br>DEN HAAG | Abschlußdatum der Recherche<br>17-10-1983 | Prüfer<br>STIENON P.M.E. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82